**Europäisches Patentamt**

(19) **European Patent Office**  (11) Numéro de publication: **0 245 182**

**Office européen des brevets**  **B1**

(12) # FASCICULE DE BREVET EUROPEEN

(45) Date de publication du fascicule du brevet: **24.10.90**  (51) Int. Cl.⁵: **G01N 21/21, H01L 21/306**

(21) Numéro de dépôt: **87420106.4**

(22) Date de dépôt: **22.04.87**

(54) **Procédé de mesure de paramètres caractéristiques d'une couche mince et appareil pour la mise en oeuvre de ce procédé.**

(30) Priorité: **24.04.86 FR 8606357**

(43) Date de publication de la demande:
**11.11.87 Bulletin 87/46**

(45) Mention de la délivrance du brevet:
**24.10.90 Bulletin 90/43**

(84) Etats contractants désignés:
**DE FR GB IT NL**

(73) Titulaire: **Tissier, Annie, 10 Les Plantées Biviers,**
**F-38330 Saint-Ismier(FR)**
Titulaire: **Varellle, Aimé, 3, Rue Gabriel Didier,**
**F-38130 Echirolles(FR)**

(72) Inventeur: **Tissier, Annie, 10 Les Plantées Biviers,**
**F-38330 Saint-Ismier(FR)**
Inventeur: **Vareille, Aimé, 3, Rue Gabriel Didier,**
**F-38130 Echirolles(FR)**

(74) Mandataire: **de Beaumont, Michel, 1bis, rue**
**Champollion, F-38000 Grenoble(FR)**

(56) Documents cités:
**DD-A- 212 618**
**US-A- 3 424 532**

**JOURNAL OF THE OPTICAL SOCIETY OF AMERICA,**
**vol. 59, no. 1, janvier 1969, pages 64-71, New York, US; K.**
**VEDAM et al.: "Ellipsometric method for the**
**determination of all the optical parameters of the**
**system of an isotropic nonabsorbing film on an**
**Isotropic absorbing substrate. Optical constants of**
**silicon" die Sicherheitstechnik beim Umgang mit Braun**
**000**
**JOURNAL OF PHYSICS E. SCIENTIFIC INSTRUMENTS,**
**vol. 16, no. 9, septembre 1983, pages 866-870, The**
**Institute of Physics, Dorking, GB; J.R. SANDERCOCK:**
**"Film thickness monitor based on white light**
**interference"**

(56) Documents cités: (suite)
**PATENT ABSTRACTS OF JAPAN,**
**vol. 6, no. 132 (E-119)[1010], 17 juillet 1982; &**
**JP-A-57 56 934 (NIPPON DENKI K.K.) 05-04-1982**

## Description

La présente invention concerne un procédé de mesure de paramètres caractéristiques d'une couche mince et un appareil pour la mise en oeuvre de ce procédé.

La présente invention s'applique notamment à la fabrication des dispositifs à semiconducteur tels que les circuits intégrés et sera décrite ci-après en relation avec cette application. Il est toutefois clair que l'invention sous son aspect général peut s'appliquer à la caractérisation de couches minces dans d'autres applications.

Lors de la fabrication de circuits intégrés, on procède généralement en faisant passer par divers appareils de formation et d'attaque de couches minces des lots de substrats. Dans un lot de substrats, l'un des substrats est habituellement réservé pour permettre de vérifier qu'une étape particulière ou une succession d'étapes s'est ou se sont déroulées selon le programme prévu. Parmi les paramètres qu'il est utile de mesurer pour caractériser une couche mince, on peut citer son indice de réfraction, son épaisseur et sa vitesse d'attaque par un produit décapant donné, ce dernier paramètre, en relation avec l'indice de réfraction, fournissant des indications quant au niveau de dopage et à la densité de la couche mince formée. Les procédés les plus courants de dépôt de couches minces, sont actuellement les diverses variantes de dépôts chimiques en phase vapeur (CVD) à basse pression, ou assistés par plasma...

Dans l'art antérieur, pour mesurer la vitesse d'attaque d'une couche mince, on procédait usuellement selon les étapes successives suivantes :
- mesure d'épaisseur de la couche mince,
- immersion du substrat portant la couche mince dans une solution d'attaque pendant un temps déterminé,
- mesure de la nouvelle épaisseur de la couche mince.

Cette succesion d'étapes pouvait être répétée plusieurs fois pour augmenter la précision. On notera toutefois que ce procédé souffre de plusieurs inconvénients fondamentaux. D'abord, il est peu commode à mettre en oeuvre et suppose un bon chronométrage de la durée d'immersion. D'autre part, il suppose que l'on peut déterminer avec précision les épaisseurs au cours de chacune des mesures successives.

Dans l'art antérieur, pour mesurer l'épaisseur, et en même temps l'indice d'une couche mince, on utilise couramment le procédé dit d'ellipsométrie. Ce procédé va être décrit ci-après plus en détail car c'est d'une analyse critique de ce procédé qu'est née la présente invention.

L'ellipsométrie est une mesure de réflectivité sous incidence oblique, en général 70° par rapport à la normale à la surface. Dans ces conditions, les coefficients de réflexion de la lumière polarisée linéairement dans le plan d'incidence ($r_p$) et perpendiculairement à ce plan ($r_s$) ne sont en général pas égaux comme dans le cas d'une incidence normale. Une mesure d'ellipsométrie est une mesure du rapport R de ces coefficients de réflexion. Classiquement, on utilise les notations suivantes :
(1) $R = r_p/r_s = $ tg Psi exp (i Delta)
où tg Psi est le module du rapport des coefficients de réflexion $r_p$ et $r_s$ et où Delta est l'argument de ce rapport.

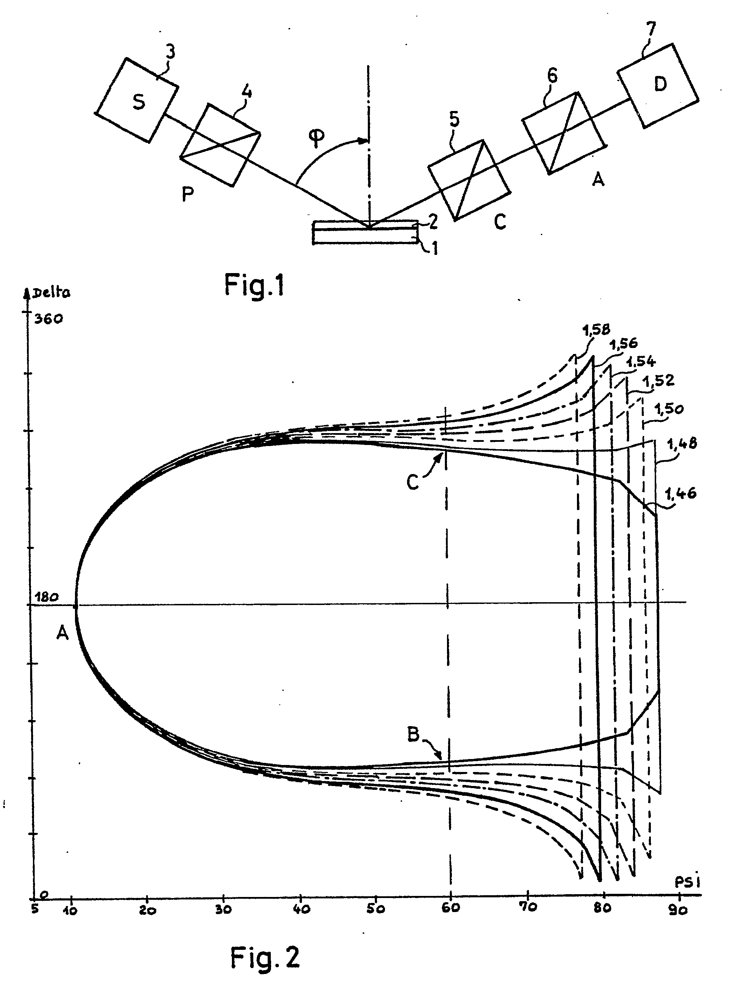

La figure 1 représente très schématiquement un ellipsomètre. Un substrat 1 portant une couche mince 2 est éclairé de façon relativement ponctuelle en lumière monochromatique, par exemple au moyen d'un laser à helium-néon 3 à une longueur d'onde de 632,8 nm, cette lumière étant polarisée linéairement. Après réflexion sur l'échantillon, la polarisation devient elliptique. Schématiquement, on peut dire que la forme de l'ellipse (ellipticité) dépend du rapport des modules des coefficients de réflexion $r_p$ et $r_s$ et l'orientation de cette ellipse dépend du déphasage introduit entre les ondes p et s. La mesure de cette ellipticité se fait en transformant la polarisation elliptique en polarisation linéaire à l'aide d'un compensateur 5 et en éteignant cette polarisation linéaire au moyen d'un analyseur 6.

En pratique, on cherche donc l'extinction du faisceau sur le détecteur en faisant tourner l'analyseur et le compensateur. En fait, dans un montage réel tel que représenté en figure 1, on interpose entre la source laser 3 et le substrat portant la couche mince un polariseur 4. La lumière renvoyée par le substrat est polarisée de façon rectiligne pour une orientation convenable du polariseur 4 combiné au compensateur 5 disposé avant ou après la zone de réflexion et cette polarisation rectiligne est éteinte par un analyseur 6 placé devant un détecteur 7. Ainsi, une mesure d'ellipsométrie se résume dans le cas décrit ci-dessus à deux mesures d'angle (polariseur et analyseur) par rapport au plan d'incidence, c'est-à-dire par rapport au plan qui contient le faisceau incident, la normale à ce plan et l'échantillon, et par conséquent le faisceau réfléchi. De cette mesure d'angle, on déduit directement Psi et Delta.

Pour la mesure de l'épaisseur d'une couche mince, il existe des appareils de calcul à microprocesseur qui permettent de déterminer l'indice n et l'épaisseur e de la couche mince en fonction de ces valeurs de Psi et Delta. En outre, comme cela est connu, la valeur de l'épaisseur e n'est déterminée qu'à un nombre entier près de demi-longueurs d'onde (en fait ce nombre est divisé par le cosinus de l'angle d'incidence Phi) de la lumière dans le matériau de la couche mince.

On va montrer que cette méthode souffre souvent d'une imprécision importante dans la détermination de l'indice n et donc dans la valeur de l'épaisseur e que l'on en déduit. En outre, cette imprécision sur e est encore accrue du fait que l'on ajoute un nombre entier de demi-longueurs d'onde dans le matériau, la valeur de cette longueur d'onde étant elle-même fonction de l'indice.

La figure 2 représente un faisceau de courbes de Delta en fonction de Psi pour des matériaux dont les indices varient de 1,46 à 1,58 par incréments de 2/100ème. Ces courbes sont symétriques par rapport à une droite Delta = 180°.

La signification de ces courbes est la suivante. Si, pour un matériau d'indice 1,46, on faisait varier régulièrement l'épaisseur entre deux valeurs successives espacées d'une demi-longueur d'onde dans le matériau, on parcourrait la courbe désignée par le chiffre 1,46. Une épaisseur nulle ou égale à un multiple entier de la demi-longueur d'onde correspond au point A et la courbe est parcourue dans le sens des aiguilles d'une montre quand on passe d'un multiple entier de la demi-longueur d'onde au multiple entier suivant. Ainsi, en fonction de la position sur la courbe d'un point mesuré de coordonnées Psi et Delta, on peut déterminer l'épaisseur de la couche.

Dans ce qui précède, on a supposé que l'on connaissait a priori l'indice de la couche mince. Dans un cas expérimental, on fait au moyen d'un ellipsomètre une mesure de Psi et Delta qui donne un point dans l'abaque représenté en figure 2. On en déduit sur quelle courbe d'indice on se trouve et, pour cette courbe, quelle est l'épaisseur. Ex examinant de plus près les courbes de la figure 2, on voit immédiatement apparaître une difficulté. Quand on se trouve près du point A toutes les courbes sont confondues, l'indice n ne peut donc pas être déterminé. Plus généralement pour des valeurs de Psi inférieures à 60°, les diverses courbes correspondant aux divers indices sont très proches les unes des autres et la moindre erreur sur la détermination de Psi et Delta a des conséquences importantes sur la détermination de n. Par contre, à droite de la ligne Psi = 60°, c'est-à-dire pour des valeurs de Psi supérieures à 60°, des déterminations plus précises sont possibles en raison de l'écart entre les courbes. Ces déterminations sont particulièrement favorables quand on approche du point de discontinuité des courbes pour Delta = 180°. C'est seulement dans ces zones que l'on pourra déterminer avec précision au moyen d'un ellipsomètre les valeurs de n et de e. Malheureusement, pour une couche donnée, il y a peu de chance que l'on tombe sur de telles valeurs comme le montre le tableau ci-après.

| INDICE | ORDRE | EPAISSEUR EN B | EPAISSEUR EN C | DISTANCE B − C |
|--------|-------|----------------|----------------|----------------|
| 1,46 | 283,1 | 122,8 | 160,4 | 37,6 |
| 1,48 | 276,7 | 120,0 | 156,5 | 36,5 |
| 1,50 | 270,6 | 117,5 | 152,8 | 35,3 |
| 1,52 | 264,8 | 115,2 | 149,2 | 34,0 |
| 1,54 | 259,3 | 113,2 | 145,4 | 32,2 |
| 1,56 | 254,0 | 114,4 | 141,6 | 30,2 |
| 1,58 | 249,1 | 109,6 | 139,2 | 29,6 |
| 1,60 | 244,3 | 108,4 | 135,3 | 26,9 |

Dans ce tableau, la première colonne désigne l'indice pour la courbe considérée, la deuxième colonne désigne l'ordre, c'est-à-dire la variation d'épaisseur correspondant au parcours d'une courbe complète ou la valeur de la demi-longueur d'onde dans le matériau considéré, la troisième colonne (épaisseur en B) indique l'épaisseur correspondant au point où la partie inférieure d'une courbe correspondant à un indice donné coupe la droite Psi = 60°, la quatrième colonne (épaisseur en C) désigne l'épaisseur correspondant au point où la partie supérieure de la courbe coupe cette droite et la dernière colonne (distance B–C) indique la variation d'épaisseur correspondant au parcours de la partie d'une courbe placée à la droite de la droite BC et sur laquelle on peut espérer faire des mesures précises.

On voit immédiatement à partir de ce tableau, en faisant le rapport entre la valeur indiquée à la dernière colonne et celle de la deuxième colonne que la zone de détermination précise d'épaisseur correspond à peine à plus de 10% de l'épaisseur d'un ordre. Ainsi, avec le procédé classique, étant donné une couche d'épaisseur inconnue, on a environ une chance sur dix seulement d'arriver à faire une mesure précise. En d'autres termes, dans neuf cas sur dix, le recours à un ellipsomètre sera d'un faible secours pour un technicien chargé de surveiller la qualité de la fabrication d'un circuit intégré en cours de traitement. Ce résultat est extrêmement inquiétant pour le contrôle de dispositifs dans lesquels les impératifs de qualité sont fondamentaux.

Par ailleurs, le document US-A 3 424 532 décrit un procédé de mesure optique d'épaisseur de couche dans lequel la couche est biseautée.

Ainsi, la présente invention prévoit un nouveau procédé de mesure de paramètres d'une couche mince, en utilisant un ellipsomètre, évitant les inconvénients des procédés de l'art antérieur tels que résumés ci-dessus.

Pour atteindre cet objet, la présente invention prévoit un procédé d'analyse d'une couche mince, utilisant un ellipsomètre permettant de fournir pour une zone de petite surface d'une couche mince des valeurs des paramètres Psi et Delta, comprenant les étapes suivantes :
- conférer à la couche mince un profil en biseau selon une direction donnée,
- déplacer ladite zone selon ladite direction jusqu'à ce que l'on se trouve dans une plage où Psi est voisin de sa valeur maximale, ou bien où Delta passe par la valeur 180°,
- effectuer des mesures de Psi et Delta au voisinage de cette plage, d'où il résulte que l'on obtient une détermination précise de n.

Dans un mode de réalisation de la présente invention, il est prévu un procédé d'analyse d'une couche mince dans lequel l'étape de déplacement consiste en déplacements discrets selon des premiers incréments de valeur déterminée jusqu'à ce que ladite plage soit atteinte ou dépassée après quoi on procède à des déplacements selon des seconds incréments de valeur plus faible et des mesures sont effectuées pour au moins une des positions correspondant aux déplacements selon les seconds incréments.

Dans un mode de réalisation de la présente invention il est prévu un procédé d'analyse d'une couche mince qui comprend en outre une étape consistant à effectuer au moins une mesure dans une région de la couche mince dont l'épaisseur n'a pas été modifiée, d'où il résulte que l'on obtient une détermination précise de cette épaisseur.

Dans un mode de réalisation de la présente invention, il est prévu un procédé d'analyse d'une couche mince qui comprend en outre une étape consistant à effectuer des mesures en plusieurs points espacés de façon connue selon la direction du biseau d'où il résulte que l'on peut obtenir une détermination de la vitesse d'attaque.

Dans un mode de réalisation de la présente invention, l'étape de formation d'un profil en biseau comprend les étapes consistant à :
- disposer la plaquette portant la couche mince dans un récipient de section interne constante dans des plans horizontaux, la plaquette étant disposée selon un angle non nul par rapport à l'horizontale,
- remplir à débit constant ledit récipient par un produit d'attaque de la couche mince jusqu'à recouvrir au moins partiellement ladite plaquette,
- vider très rapidement par rapport à la vitesse de remplissage ledit récipient dès que le niveau maximum souhaité a été atteint,
- rincer la plaquette immédiatement après que le récipient a été vidé.

En outre, pour permettre l'obtention d'une couche mince à profil en biseau, ce qui constitue une condition nécessaire de mise en oeuvre de la présente invention, il est également prévu un appareil de formation d'un profil en biseau pour une couche mince formée sur un substrat, qui comprend : un récipient de section horizontale constante, des moyens pour maintenir le substrat dans le récipient à un angle choisi par rapport à l'horizontale, des moyens pour introduire dans le récipient un liquide d'attaque de la couche mince à vitesse contante, des moyens pour vider très rapidement le récipient, et des moyens d'arrosage pour projeter sur la plaquette un liquide de rinçage.

Ainsi, selon un aspect fondamental de la présente invention, il est prévu d'utiliser un ellipsomètre pour déterminer d'abord l'indice de la couche mince à mesurer en se plaçant dans des conditions optimales d'épaisseur pour lesquelles cette détermination d'indice peut être précise. Ensuite, seulement, une fois cet indice connu, la mesure de l'épaisseur réelle est effectuée. Selon un avantage supplémentaire de la présente invention, on notera qu'elle permet très simplement de déterminer la vitesse d'attaque d'une couche mince en même temps que l'on détermine son indice et son épaisseur, cette détermination de la vitesse d'attaque constituant également un paramètre important de caractérisation d'une couche mince.

Ces objets, caractéristiques et avantages ainsi que d'autres de la présente invention seront exposés plus en détail dans la description suivante d'un mode de réalisation particulier faite en relation avec les figures jointes parmi lesquelles :

la figure 1 décrite précédemment représente très schématiquement un ellipsomètre classique ;

la figure 2 représente un faisceau de courbes de Delta en fonction de Psi pour diverses valeurs de l'indice d'une couche mince ;

les figures 3A et 3B représentent une plaquette sur laquelle une couche mince est conformée en biseau ; et

la figure 4 représente schématiquement un appareil de formation de biseau sur une couche mince selon la présente invention.

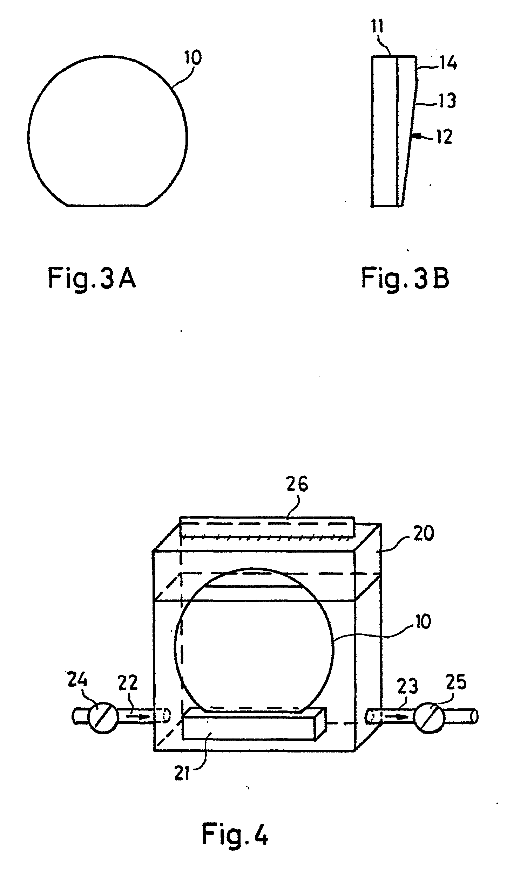

Les figures 3A et 3B représentent en vue de face et en coupe une tranche de silicium 10 constituée d'un substrat 11 sur lequel est déposée une couche mince 12 conformée selon la présente invention, c'est-à-dire comprenant au moins une partie en biseau selon une direction donnée. La partie en biseau est désignée par la référence 13 et une partie 14 de la couche mince est maintenue à son épaisseur initiale. On notera que le biseau pourrait être plus important, c'est-à-dire que, dans la figure 3B, la partie inférieure du substrat pourrait être complètement dénudée. Bien entendu, la figure 3B n'est pas représentée à l'échelle. Couramment, le substrat aura une épaisseur de l'ordre de 0,5 mm et la couche mince une épaisseur de l'ordre du millième de millimètre ou moins.

Ainsi, pour mettre en oeuvre la présente invention, on utilise un substrat tel que représenté en figure 3 et une mesure ellipsométrique est effectuée en un point quelconque de ce substrat. Un déplacement relatif est alors effectué dans le sens du biseau pour arriver dans la région où la mesure ellipsométrique peut être effectuée avec précision, c'est-à-dire au voisinage du point de passage par la valeur Delta = 180°. Plusieurs mesures peuvent être effectuées au voisinage de cette valeur pour identifier avec précision la courbe Delta en fonction de Psi sur laquelle on se trouve. Eventuellement, ces mesures sont effectuées pour des ordres différents, c'est-à-dire des épaisseurs variant de multiples entiers de la demi-longueur d'onde. Une fois ces mesures effectuées, on a une bonne connaissance de l'indice de réflexion de la couche mince et l'on peut alors, par des relèvements de Psi et Delta à des emplacements choisis, par exemple au niveau de la zone 14 de la figure 3B déterminer avec précision l'épaisseur de la couche mince dans ces zones. Les mesures dans la zone 14 donnent l'épaisseur totale de la couche mince et des mesures successives à intervalles choisis le long du biseau permettent de déterminer la vitesse d'attaque de la couche mince au moment de la formation du biseau.

On notera que ces diverses mesures peuvent facilement être automatisées. Le substrat muni d'un biseau est placé sur une table de déplacement permettant de faire varier la tache d'analyse de l'ellipsomètre le long d'une direction correspondant à la direction du biseau. A l'analyse des courbes de la figure 2, on voit qu'au voisinage de la partie droite des courbes, la valeur de Delta varie très rapidement, de façon discontinue, pour passer d'une valeur nettement inférieure à 180° à une valeur nettement supérieure à 180° pour un très faible déplacement. Un mode d'automatisation peut par exemple consister à déplacer par incréments successifs la tache d'analyse, à mémoriser les valeurs de Psi et Delta correspondantes et à arrêter le déplacement dès qu'on est passé par le saut brutal mentionné ci-dessus des valeurs de Delta. Alors, on peut prévoir un déplacement en sens inverse d'incréments nettement plus faibles et relever plusieurs points correspondant à la zone précise d'analyse.

Selon un avantage de la présente invention, au cours de la même mesure que celle qui a été utilisée pour déterminer l'indice et l'épaisseur, on peut déterminer la vitesse d'attaque. En effet, on pourra utiliser les mesures faites lors du déplacement selon un premier incrément de grande valeur pour, une fois l'indice déterminé, calculer les différences d'épaisseur à des points régulièrement espacés, c'est-à-dire la vitesse d'attaque (en tenant compte des paramètres de réalisation de l'attaque). Il est notamment intéressant de déterminer si la vitesse d'attaque est constante ou non le long du biseau car cela peut donner des indications sur des variations éventuelles de niveau de dopage ou des variations de densité. On peut même utiliser ce procédé pour vérifier la qualité de couches à variation de niveau de dopage volontaire.

On a décrit précédemment l'invention en relation avec une couche mince déposée sur un substrat. Bien entendu, le substrat peut lui-même être constitué d'une plaquette de base sur laquelle sont déposées d'autres couches minces. Egalement, selon la présente invention, on peut prévoir que le biseau attaque une ou plusieurs couches minces dans le cas où plusieurs couches sont superposées.

La figure 4 représente un appareil de formation d'un biseau sur une couche mince déposée sur une plaquette 10. Cet appareil comprend un récipient 20 muni à sa partie inférieure d'un moyen de support 21 permettant de maintenir la plaquette 10 verticalement selon un angle donné par rapport à l'horizontale. Vers le bas du récipient sont prévues une canalisation 22 d'entrée de liquide d'attaque et une canalisation 23 d'extraction du liquide d'attaque. Sur la canalisation 22 est prévue une pompe 24 à débit constant et sur la canalisation 23 est prévue une pompe 25 d'extraction à grande vitesse. En outre, le dispositif comprend une douche d'arrosage 26.

Cet appareil fonctionne de la façon suivante. Le récipient étant vide, la plaquette est disposée dans le support 21. Ensuite, le liquide d'attaque est introduit dans le récipient à vitesse constante de sorte que le liquide monte régulièrement dans le récipient. On peut par exemple prévoir un remplissage entre la position basse de la plaquette et la position la plus haute choisie de celle-ci en une durée de l'ordre de 10 à 300 secondes. Il en résulte que les parties inférieures de la plaquette sont exposées plus longtemps au liquide d'attaque que la partie supérieure et donc qu'une attaque en biseau est formée, le biseau étant régulier si la vitesse d'attaque est constante pour la couche mince considérée. Une fois le récipient rempli au niveau choisi, on peut, ou bien marquer un temps d'arrêt pour former une marche, ou bien vider immédiatement le récipient. Cette vidange est de préférence effectuée très rapidement à l'aide d'une pompe à grande vitesse 25 disposé sur la canalisation d'évacuation 23. D'autre part, il est important qu'un rinçage soit effectué très rapidement après ou même pendant la vidange. Ceci est réalisé au moyen d'un système d'arrosage 26 qui projette par exemple de l'eau désionisée sur la plaquette immédiatement après la vidange en commençant éventuellement même pendant cette vidange. Bien entendu, ce système d'arrosage est disposé convenablement par rapport à la plaquette pour assurer un arrosage uniforme qui peut être simplifié si la plaquette est disposée légèrement en oblique par rapport à la verticale. On pourra également imaginer des combinaisons de remplissages successifs par des produits d'attaque distincts ou de concentrations différentes dans des buts d'analyses particulières, notamment dans le cas où l'on souhaite attaquer plusieurs couches successives.

Un avantage important de l'appareil est qu'il ne comprend aucun appareillage mécanique d'introduction de la plaquette, ce qui est particulièrement souhaitable dans l'environnement fortement corrosif d'un bain d'attaque à base généralement d'acide fluorhydrique.

Comme cela est usuel, la présente invention a été décrite uniquement en relation avec des modes de réalisation particuliers et pourra être soumise à diverses variantes. Par exemple, quand on considère les courbes de la figure 2, il a été dit qu'une précision notable pouvait être atteinte pour un angle Psi supérieur à 60°. Ceci est évidemment lié aux valeurs d'indice particulières indiquées entre 1,46 et 1,58. Pour des valeurs d'indice plus faibles ou plus grandes, la zone de haute précision pourra être distincte.

## Revendications

1. Procédé d'analyse d'une couche mince utilisant un ellipsomètre permettant de fournir, pour une zone de petite surface d'une couche mince taillée en biseau selon une direction donnée, des valeurs des paramètres Psi et Delta, caractérisé en ce qu'il comprend les étapes suivantes:
– déplacer ladite zone selon ladite direction jusqu'à ce que l'on se trouve dans une plage où Psi est voisin de sa valeur maximale, ou bien où Delta passe par la valeur 180°, et
– effectuer des mesures de Psi et Delta au voisinage de cette plage, d'où il résulte que l'on obtient une détermination précise de l'indice n de la couche.

2. Procédé selon la revendication 1, caractérisé en ce que l'étape de déplacement consiste en déplacements discrets selon des premiers incréments de valeur déterminée jusqu'à ce que ladite plage soit atteinte ou dépassée, après quoi on procède à des déplacements selon des seconds incréments de valeur plus faible, et en ce que des mesures sont effectuées pour au moins une des positions correspondant aux déplacements selon les seconds incréments.

3. Procédé d'analyse selon l'une des revendications 1 ou 2, caractérisé en ce qu'il comprend en outre l'étape consistant à effectuer au moins une mesure dans la région de la couche mince dont l'épaisseur n'a pas été modifiée, d'où il résulte que l'on obtient une détermination précise de cette épaisseur.

4. Procédé d'analyse selon l'une quelconque des revendications 1 à 3, caractérisé en ce qu'il comprend en outre l'étape consistant à effectuer des mesures en plusieurs points espacés de façon connue selon la direction du biseau, d'où il résulte que l'on peut obtenir une détermination de la vitesse d'attaque et de ses variations éventuelles.

5. Procédé d'analyse selon la revendication 1, caractérisé en ce que l'étape de formation d'un profil en biseau comprend les étapes consistant à:
– disposer la plaquette portant la couche mince dans un récipient de section interne constante dans des plans horizontaux, la plaquette étant disposée selon un angle non nul par rapport à l'horizontale,
– remplir à débit constant ledit récipient par un produit d'attaque de la couche mince jusqu'à recouvrir au moins partiellement ladite plaquette,
– vider très rapidement par rapport à la vitesse de remplissage ledit récipient dès que le niveau maximum souhaité a été atteint, e
– rincer la plaquette immédiatement après que le récipient a été vidé.

6. Appareil de formation d'un profil en biseau pour une couche mince formée sur un substrat, pour la mise en œuvre du procédé selon l'une quelconque des revendications 1 à 5, caractérisé en ce qu'il comprend:
un récipient (20) de section horizontale constante,
des moyens (21) pour maintenir le substrat dans le récipient à un angle choisi par rapport à l'horizontale,
des moyens (22, 24) pour introduire dans le récipient un liquide d'attaque de la couche mince à vitesse constante,
des moyens (23, 25) pour vider très rapidement le récipient, et
des moyens (26) d'arrosage pour projeter sur la plaquette un liquide de rinçage.

7. Appareil selon la revendication 6, caractérisé en ce que la plaquette est maintenue verticalement dans le récipient.

## Patentansprüche

1. Verfahren zum Analysieren einer dünnen Schicht unter Verwendung eines Ellipsometers, um so für einen kleinen Oberflächenabschnitt einer dünnen Schicht, die in einer vorgegebenen Richtung abgeschrägt ist, die Werte der Parameter Psi und Delta zu erhalten, dadurch gekennzeichnet, daß es die folgenden Schritte aufweist:
– Verschieben des genannten Abschnitts in der genannten Richtung, bis er sich in einem Bereich befindet, in der Psi in der Nähe seines Maximalwertes liegt oder in der Delta den Wert 180° durchläuft, und
– Messen von Psi und Delta in der Nähe dieses Bereichs, woraus man eine genaue Bestimmung des Brechungsindex n der Schicht erhält.

2. Verfahren nach Anspruch 1, dadurch gekennzeichnet, daß der Schritt des Verschiebens aus stufenweisen Verschiebungen besteht mit ersten Stufen einer vorgegebenen Größe, bis der genannte Bereich erreicht oder überschritten wird, woran sich Verschiebungen mit zweiten Stufen geringerer Größe anschließen und daß die Messungen durchgeführt werden für wenigstens eine der Stellungen entsprechend den Verschiebungen mit den zweiten Stufen.

3. Verfahren nach Anspruch 1 oder 2, dadurch gekennzeichnet, daß es den weiteren Verfahrens-

6

schritt aufweist, wenigstens eine Messung in demjenigen Abschnitt der dünnen Schicht durchzuführen, dessen Dicke nicht verändert worden ist, wodurch eine genaue Bestimmung dieser Dicke erhalten wird.

4. Verfahren nach einem der Ansprüche 1 bis 3, dadurch gekennzeichnet, daß es den weiteren Verfahrensschritt aufweist, in an sich bekannter Weise Messungen an verschiedenen im Abstand voneinander angeordneten Stellen in Richtung der Abschrägung durchzuführen, um so eine Bestimmung der Abtraggeschwindigkeit und deren möglicher Variationen zu erhalten.

5. Verfahren nach Anspruch 1, dadurch gekennzeichnet, daß der Verfahrensschritt der Ausbildung einer Abschrägung die folgenden Schritte aufweist:
– Anordnen des die dünne Schicht tragenden Wafers in einem Gefäß mit einem konstanten inneren Querschnitt in waagrechten Ebenen, wobei der Wafer unter einem Winkel größer als Null bezüglich der Waagrechten angeordnet wird,
– Füllen des Gefäßes mit konstanter Rate mit einem Stoff, der die dünne Schicht abträgt, bis der Wafer wenigstens teilweise bedeckt ist,
– sehr schnelles Entleeren im Vergleich zur Füllgeschwindigkeit des Gefäßes sowie die maximal gewünschte Füllhöhe erreicht worden ist und
– Spülen des Wafers unmittelbar nach der Entleerung des Gefäßes.

6. Vorrichtung zur Ausbildung eines abgeschrägten Profils einer auf einem Substrat ausgebildeten dünnen Schicht zur Durchführung des Verfahrens nach einem der Ansprüche 1 bis 5, dadurch gekennzeichnet, daß sie aufweist:
– einen Behälter (20) mit konstantem waagrechten Querschnitt,
– eine Anordnung (21), um das Substrat im Gefäß unter einem zur Waagrechten vorgewählten Winkel zu haiten,
– eine Anordnung (22, 24), um in das Gefäß mit konstanter Geschwindigkeit eine Flüssigkeit zum Abtragen der dünnen Schicht einzuführen,
– eine Anordnung (23, 25), um das Gefäß sehr schnell zu entleeren und
– eine Gießanordnung (26), um auf den Wafer eine Sprühflüssigkeit aufzusprühen.

7. Vorrichtung nach Anspruch 6, dadurch gekennzeichnet, daß der Wafer senkrecht im Gefäß gehalten ist.

**Claims**

1. A method for analyzing a thin layer using an ellipsometer permitting to provide, for a small surface zone of a thin layer having a bevelled edge according to a given direction, values of parameters Psi and Delta, characterized in this that it comprises the following steps:
.– displacing said zone according to said direction until it reaches a region where Psi is close to its maximum value or where Delta passes by the value 180°, and
– measuring Psi and Delta at the neighbourhood of this region, whereby an accurate determination of the refraction coefficient n of the layer is obtained.

2. A method according to claim 1, characterized in this that the displacing step consists in discontinous displacements according to first increments of determined value until said region is reached or exceeded, then in displacements according to second increments of lower value, and in that the measurements are made for at least one of the positions corresponding to the displacements according to second increments.

3. A method according to claim 1 or 2, characterized in this that it further comprises the step consisting in carrying out at least one measurement in the thin layer region, the thickness of which has not been modified, whereby an accurate determination of this thickness is obtained.

4. A method according to any of claims 1 to 3, characterized in this that it further comprises the step consisting in making measurements at several points spaced in a known way according to the bevel direction, whereby it is possible to obtain a determination of the etching speed and of its possible variations.

5. A method according to claim 1, characterized in this that the step of forming a bevel comprises the steps consisting in:
– arranging the wafer bearing the thin layer in a vessel having a constant internal section in horizontal planes, the wafer being arranged according to a non-null angle with respect to an horizontal plane,
– filling at a constant flow said vessel with a product etching the thin layer until said wafer is at least partially covered;
– emptying, very rapidly with respect to the filling speed of said vessel, as soon as the maximum desired level has been reached, and
– rinsing the wafer immediately after the vessel has been emptied.

6. A device to form a bevelled profile for a thin layer formed on a substrate, for implementing the method according to any of claims 1 to 5, characterized in this that it comprises:
a vessel (20) having a constant horizontal section,
means (21) for maintaining the substrate in the vessel at a chosen angle with respect to the horizontal line,
means (22, 24) for introducing at constant speed into the vessel an etching liquid for the thin layer, means (23, 25) for very rapidly emptying said vessel, and
spraying means (26) for projecting a rinsing liquid onto the wafer.

7. A device according to claim 6, characterized in this that said wafer is maintained vertically in the vessel.

Fig.1

Fig. 2

Fig. 3A

Fig. 3B

Fig. 4